(19) **Europäisches Patentamt**
**European Patent Office**
**Office européen des brevets**

(11) **EP 4 488 621 B1**

(12) **EUROPEAN PATENT SPECIFICATION**

(45) Date of publication and mention
of the grant of the patent:
**18.02.2026 Bulletin 2026/08**

(21) Application number: **23184095.0**

(22) Date of filing: **07.07.2023**

(51) International Patent Classification (IPC):
**G01B 11/255** (2006.01)     **B23Q 17/24** (2006.01)

(52) Cooperative Patent Classification (CPC):
**G01B 11/255; B23Q 17/2457**

(54) **METHOD OF DETERMINING AN EDGE RADIUS OF A CUTTING TOOL**

VERFAHREN ZUR BESTIMMUNG EINES KANTENRADIUS EINES SCHNEIDWERKZEUGS

PROCÉDÉ DE DÉTERMINATION D'UN RAYON D'ARÊTE D'UN OUTIL DE COUPE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**08.01.2025 Bulletin 2025/02**

(73) Proprietor: **AB Sandvik Coromant**
**811 81 Sandviken (SE)**

(72) Inventors:
• **Miller, Andrew**
**811 81 Sandviken (SE)**
• **Engberg, Fredrik**
**811 81 Sandviken (SE)**

(74) Representative: **Sandvik**
**Sandvik Intellectual Property AB**
**811 81 Sandviken (SE)**

(56) References cited:
**US-A1- 2019 381 624**

• **HARTNAGEL WILLY: "Der Einflu� von Kr�mmung und Material einer Kante auf die Lichtbeugung. I", ANNALEN DER PHYSIK, vol. 459, no. 1-5, 1959, DE, pages 188 - 202, XP093110804, ISSN: 0003-3804, DOI: 10.1002/andp.19594590123**

• **LANGLOIS PIERRE ET AL: "Real-time curvature radii measurements using diffraction edge waves", APPLIED OPTICS, vol. 24, no. 8, 15 April 1985 (1985-04-15), US, pages 1107, XP093110791, ISSN: 0003-6935, DOI: 10.1364/AO.24.001107**

• **TANG WENYAN: "CUTTING EDGE SHARPNESS MEASUREMENT USING ANGLE LIMITED TOTAL INTEGRATED SCATTERING", ROBOTICS, VISION AND SENSORS, SIGNAL PROCESSING AND CONTROL. MAUI, NOE. 15 - 19, 1993; [PROCEEDINGS OF THE INTERNATIONAL CONFERENCE ON INDUSTRIAL ELECTRONICS, CONTROL, AND INSTRUMENTATION (IECON)], NEW YORK, IEEE, US, vol. 3, 15 November 1993 (1993-11-15), pages 1626 - 1628, XP000437476**

• **JEON SEONGKYUL ET AL: "Knife-edge interferometry for cutting tool wear monitoring", PRECISION ENGINEERING, vol. 50, October 2017 (2017-10-01), AMSTERDAM, NL, pages 354 - 360, XP093110812, ISSN: 0141-6359, DOI: 10.1016/j.precisioneng.2017.06.009**

• **AKBARI MANSUR ET AL: "Comparison of transparent objects metrology through diamond cutting edge radii measurements", CIRP JOURNAL OF MANUFACTURING SCIENCE AND TECHNOLOGY, ELSEVIER, AMSTERDAM, NL, vol. 13, 15 January 2016 (2016-01-15), pages 72 - 84, XP029520619, ISSN: 1755-5817, DOI: 10.1016/J.CIRPJ.2015.12.001**

EP 4 488 621 B1

**Description**

TECHNICAL FIELD

The present invention relates to a method of determining an edge radius (ER) of an edge of a cutting tool and a system therefore.

BACKGROUND

Cutting tools for metal cutting operations are known in the art. Examples of cutting tools are inserts for turning and milling, and drills for drilling. The shape and sharpness of the edge of the cutting tool is important for its performance. In applications such as rough turning and milling it is important that the cutting edge is not too sharp, since a sharp edge is also sensitive for high loads. On the other hand, in fine turning and finishing operations with high focus on producing a low surface roughness of the work piece, then a sharp cutting edge is advantageous. And for all cutting tools for metal cutting it is advantageous to have high control of the edge radius to achieve tools with predictable cutting properties and long tool lives.

There are several known methods for measuring ER of a cutting tool edge. One example is by a contact profilometer where a stylus or a roller is moved in contact with a sample and then moved laterally across the sample for a specified distance and with a specified contact force, such as a roller following the edge rounding and detecting the position of the roller. Another method is by optical means where for example interferometry of light can be used to analyze the shape of a surface. Both these methods are in general relatively slow and the equipment's are relatively large. The article "Der Einfluß von Krümmung und Material einer Kante auf die Lichtbeugung" by Willy Hartnagel discloses a method of measuring the cutting edge radius of razor blades by measuring angle-dependent light diffraction off the edge.

It is an object of the present invention to provide an improved method of measuring ER of a cutting tool. It is a further object of the present invention to provide a fast measurement method and a method that has a high resolution of the measurement also when the ER is as small as between 2 $\mu$m and 7 $\mu$m. It is also an object to provide a system for such ER measurements.

SUMMARY OF THE INVENTION

At least one of the above-mentioned objects is achieved by a method according to claim 1 and a system in accordance with claim 9. Preferred embodiments are disclosed in the dependent claims.

The method in accordance with the present invention is a method of determining the edge radius, ER, of a cutting edge of a cutting tool using light diffraction. The cutting edge is located between a rake face of the cutting tool and a flank face of the cutting tool, and wherein the cutting edge is provided with an edge rounding. The method comprises the steps of

- non-parallel to the cutting edge, subjecting the cutting edge of the cutting tool to light during a selected exposure time, t, such that light is diffracted by the edge rounding and wherein a light exposed region of the cutting tool is in line of sight from the light source and a shadow region of the cutting tool comprise diffracted light,

- detecting intensity of the diffracted light from the shadow region of the cutting tool, wherein the detecting comprises detecting in a detection area, wherein the detection area extends both along the cutting edge and across the cutting edge to include the light diffracted by the cutting edge, detecting the intensity in one or more detection points that covers the detection area, and summarizing the intensities detected in all the detection points and achieving the detected intensity, I(det),

- determining the ER of the cutting edge by comparing the detected intensity, I(det), with stored intensity data, I(ref), wherein the stored intensity data I(ref) is representative of ER.

The intensity of diffracted light is in the present invention measured in the shadow side of an edge and the intensity is dependent on the radius of the edge. The intensity is higher with small edge radius and lower with a large edge radius. It was realized that by utilizing collected reference intensity data of cutting edges with known ER values, a measurement of the collected sum of intensities of an unknown ER could be very precisely made by comparing the measures intensity data with the reference intensity data.

The method of the present invention is advantageous for example in that it is a very fast method. The time needed to expose the cutting edge to get a reliable result is by the inventor's experience very low, the exposure time can typically be about one millisecond. Another advantage is that the method is very accurate and that relatively small ER can easily be measured. Since the method is so fast it is useful for measurement during production of cutting tools since it would not slow down the production time. The method is further non-destructive since there is no contact between system and cutting edge during the measurement.

The present invention also relates to a system for determining the edge radius (ER) of a cutting edge of a cutting tool. The system comprises

- a light source,

- a fixture for holding the cutting tool,

- a cutting tool with a cutting edge

- a detector unit for detecting light intensity,

- a storage unit for storing intensity data,

wherein the cutting edge is located between a rake face of the cutting tool and a flank face of the cutting tool , and wherein the cutting edge is provided with an edge rounding, the cutting tool is positioned in the fixture,

wherein the light source is positioned to subject the cutting edge to light such that light is diffracted by the edge rounding, wherein a light exposed region of the cutting tool is in line of sight from the light source and a shadow region of the cutting tool comprise diffracted light,

the detector unit is positioned in shadow of the cutting tool and is arranged to detect diffracted light from the edge in the shadow region of the cutting tool, the detector unit is arranged to detect intensity in a detection area, wherein the detection area extends both along the cutting edge and across the cutting edge to include the light diffracted by the cutting edge, the intensity in the detection area is detected in one or more detection points that covers the detection area, such that an output from the detector unit is a detected intensity I(det) which corresponds to the sum of the intensities in the detection points,

the system further comprises a storage unit with stored intensity data I(ref) representative of ER, whereby ER can be determined by comparing the detected intensity, I(det), with the stored intensity data, I(ref).

The system in accordance with the present invention is relatively small and compact. In addition to that the component costs are relatively low. A fast and accurate measurement of the ER of the cutting tools either during or after production makes it possible to increase the control of the ER of cutting tools and this would lead to an increased and more predictable lifetime of cutting tools. Further the invention makes it possible to produce cutting tools with small ER that is an advantage for finishing cutting tools.

Cutting tools are herein cutting tools for metal cutting applications such as cutting inserts for turning or milling, or drills.

The cutting tool disclosed herein has a rake face and a flank face. Between the rake face and the flank face is the cutting edge, the cutting edge is located between the two faces.

The cutting edge of the cutting tool is rounded, i.e. has an edge rounding. The edge radius, ER, of the cutting edge can determined in accordance with the present invention. ER can vary along the edge from close to the rake face to close to the flank face or can be about constant along its rounding. The ER can vary such that different positions of the cutting edge shows different ER, i.e. the ER can vary along the extension of the cutting edge. The diffracted light origins from light source, is in the present invention diffracted by the cutting edge and is then detected from the shadow side of the cutting tool.

Light diffraction is a phenomenon that is utilized in the present invention. Light behaves like waves and thereby propagates around a wall with a corner, also into the "shadow side" of the wall. The light is diffracted by the edge rounding but is also diffracted by defects on the edge if such are present.

During the method of the present invention the exposure of the cutting tool with light provides a light exposed region of the cutting tool and a shadow region. In the shadow region the detector is out of sight relative the light source. To assure accuracy of the method, it is preferred to arrange an environment free of other lights sources for the system. For example by arranging a light isolated box that fits the system of the present invention and to run the method with the box closed.

The selected exposure time, t, of the present invention is a time selected to reach enough intensity with the aim to use a short time to reduce measurement time. The selected time needs to be adapted to the specific system setup.

The detected intensity of the present invention is the during t collected sum of detected intensities, i.e. the sum of intensities, I(det). The detection is made with a detector unit, an optical detector, that can for example be camera. The area of detection is to be selected so that it covers the full width of the diffracted light spot. Preferably the area of detection is selected such that the outer rim of the area are pixels with no value, i.e. no light detected, to ensure that the full diffracted light spot is included. The center of the area of detection is the point at the center of the cross in the detector view, if such cross is present.

The light source used in the present inventive method and system can for example be a laser.

The fixture for holding the cutting tool is made by suitable mechanical means. The fixture is preferably provided with a seat wherein the cutting tool is to be seated.

The storage unit for storing intensity data, can for example be a computer. The reference intensity data is unique for each system and therefore needs to be collected for the specific system to use. The stored intensity data is to be used to relate the collected intensity, I(det), of a cutting edge with an unknown ER, with the collected reference intensity data that is data collected from edges or reference samples with known ER. The stored intensity data, I(ref) works as a library and can for example be stored in computer memory. This library that contains data provides the relation between collected intensity and ER. The data is to be collected using the same system and the same settings as the detection is to be made in.

The primary direction Y of the light is herein defined to be the direction from the light source to the light that is aligned with the cutting edge but is not shadowed by the cutting tool edge. The primary direction can be found by the skilled person, for example by identifying a projected image of the cutting edge on the detector side of the cutting edge.

The angle $\alpha$ is herein defined to be the angle, as seen in a cross section of the cutting edge, between the direction from the edge to a center of the detection area and the primary direction, Y, of light. The angle $\alpha$ is zero when the light/shadow interface is centralized in the detection area. The higher the $\alpha$, the further away from the light side of the cutting tool. The cross section of the cutting edge is a cross section perpendicular to the extension of the cutting edge. The rounding of the cutting edge can be studies in this cross section.

As seen in a cross section of the cutting edge, the angle $\beta$ is herein defined to be the angle between the primary direction Y of the light and rake face of the cutting tool. The angle $\beta$ is herein to define the angle at which the cutting edge is to be analyzed with regards to ER. The wedge angle, which is the angle between the rake face and the flank face of a cutting tool, can be positive, neutral or negative where neutral indicates 90°. Depending on what tool that is in focus, different positions along the edge rounding can be of particular interest.

In one embodiment of the present invention the light is subjected to collimation. In one embodiment of the present invention the light is collimated light. When the light is collimated the light waves are parallel. The closer to fully collimated light, the more precise and correct the ER result will be.

In one embodiment of the method of the present invention the step of detecting intensity comprises positioning a detector unit at an angle $\alpha$ of 10° - 30°, wherein, as seen in a cross section of the cutting edge, $\alpha$ is the angle between the direction from the edge to a center of the detection area and the primary direction, Y, of light, and detecting intensity with the detector unit in this position. If the angle $\alpha$ is too large the intensity will be lower and then the exposure time needs to be extended to compensate for the low intensity. The time of measurement will thus be longer if the angle $\alpha$ is larger. If the angle $\alpha$ too low the detector is placed very close to the primary direction of light and then there is a risk that not diffracted light might reach the detector. The detecting intensity preferably comprises positioning a detector unit at an angle $\alpha$ of 10°-20°, more preferably 15°- 20°.

In one embodiment of the present invention the method further comprises a step of comparing the determined ER with a valid range of ER between 2 $\mu$m and 70 $\mu$m, preferably between 4 $\mu$m and 50 $\mu$m. A determination of ER within these ranges are suitable for the present invention since an ER result within this range is reliable.

In one embodiment of the method of the present invention the step of subjecting the cutting edge of the cutting tool to light comprises subjecting the cutting edge to laser light.

In one embodiment of the method of the present invention the method comprises a calibration comprising step A prior to the step of detecting intensity, the step A comprising moving the detector unit into a position where the diffracted light is centralized in the detection area of the detector unit.

In one embodiment of the method of the present invention the method comprises a calibration comprising step B to select an exposure time, t, the step B is made as part of a collection of stored intensity data I(ref) and is made prior to the step of detecting intensity, the step B comprises using a detector unit with pixels and wherein each pixel has an upper limit where it is saturated, and wherein the step B includes exposing the sharpest of the reference cutting edges to light and selecting a time t of exposure such that none of the pixels in the detector unit is saturated by the diffracted light during the exposure time t.

In one embodiment of the method of the present invention the step of determining ER comprise comparing detected intensity with stored intensity and wherein the stored intensity, I(ref), representative of ER, is a function:

$$ER=a*I(det)^{b}$$

wherein I(det) is the sum of the intensities detected by the detector unit for a specific ER and a and b are constants. This function has shown to provide a line that well follows the curve of the detected intensities in relation to the ER of cutting tools.

In one embodiment of the method of the present invention the step of detecting intensity is made at two separate positions along the edge rounding, at an angle β of between 20°- 25°, preferably at about 22.5°, and at an angle β of between 40°- 50°, preferably at of about 45°, wherein β, as seen in a cross section of the cutting edge, is the angle between the primary direction Y of the light and rake face of the cutting tool.

In one embodiment of the system of the present invention the detector unit (6) is positioned at an angle α of 10° - 30° from the primary direction Y of light in shadow of the cutting tool (1), wherein, as seen in a cross section of the cutting edge, α is the angle between the direction from the edge to a center of the detection area and the primary direction, Y, of light. If the angle α is too large the intensity will be lower and then the exposure time needs to be extended to compensate for the low intensity. The time of measurement will thus be longer if the angle α is larger. If the angle α too low the detector is placed very close to the primary direction of light and then there is a risk that not diffracted light might reach the detector. The detector unit is preferably positioned at an angle α of 10°- 20°, more preferably 15°- 20°.

In one embodiment of the system of the present invention the detector unit is a camera. A camera is advantageous since it can give a real time picture of the intensity. Thereby it is easy to adjust the relative positions such that the diffracted intensity is placed in the center of the area of detection in the camera. It is also advantageous with a camera and the real time monitoring of the cutting edge in that positions with for example dust or dirt can be avoided.

In one embodiment of the system of the present invention the light source is a laser, preferably a so called line laser. In a line laser the light source is a light source that provide emitted light that is extended in one direction such that the emitted light is line shaped. The light of the line laser is oriented such that the line intercept the cutting edge, preferably the line oriented with its extension in a direction perpendicular to the extension of the cutting edge. A point laser can be provided with a prism to achieve a line laser.

In one embodiment of the system of the present invention wavelength of the laser is 600-700 nm, preferably 620-660 nm. This is advantageous for the measurement of ER within an ER range of 2 μm to 70 μm and preferably 4 μm to 50 μm.

In one embodiment of the system of the present invention the detector unit comprises pixels and wherein each pixel has an upper limit where it is saturated, and wherein the method includes a calibration step to select an exposure time, wherein the exposure time is selected such that none of the pixels in the detector unit is saturated by the diffracted light during the measurement, and wherein the measurement is made during the exposure time. If for example the value of one pixel can be between 0 and 255, it is suitable to select an exposure time that results in a maximum intensity of 200 in all of the pixels. The exposure time is suitably selected such that the maximum intensity in a detection point is between 75% - 85% of its saturated value, preferably about 80% of its saturated value.

In one embodiment of the system of the present invention the detector unit and/or the cutting tool is mounted such that it can be displaced and/or pivoted.

In one embodiment of the system of the present invention the intensity of the light is such that it shows a constant irradiance profile through the cross-section of the laser beam. A uniform intensity over the width of the light is advantageous in that the more precise and correct the ER result will be achieved.

In one embodiment of the system of the present invention the distance between the cutting tool and the detector unit is between 50 - 150 mm.

In one embodiment of the system of the present invention the distance between the light source and the cutting tool it is between 50 - 150 mm.

In one embodiment of the present invention the cutting tool is mounted in a fixture for holding the cutting tool that is adjustable such that ER along the edge rounding can be measured easily. The fixture is preferably arranged such that the cutting tool is movable both in height, horizontally and pivoted.

The method of the present invention can be automatized such that an operator only needs to mount the insert in the holder and then start the measurement machine that automatically calibrates and make pre-defined ER measurements. Also the mounting of the insert in the fixture can be automized.

In one embodiment of the present invention the measurement is made as part of cutting tool production.

In one embodiment the measurement is made in analyzing the quality of the edge of a cutting tool. In one embodiment of the present invention the method is also used for defect detection such that the ER of the cutting tool is monitored, and defects are visible as abnormal intensity appearance. In one embodiment of the present invention the method is also used for wear detection for studying worn cutting edges. Also in this case abnormal intensity appears when the light is diffracted by a part of the cutting edge that is for example worn or damaged.

In one embodiment of the present invention the system comprises a processing circuitry; and a memory, said memory containing instructions executable by said processing circuitry whereby said device/system is operative for performing the method of the present invention.

The present invention also relates to a computer program comprising computer readable code means to be run in the system of the present invention, which computer readable code means when run in the system causes the system to perform the method of the present invention. The present invention also relates to a carrier containing the computer program, wherein the carrier is one of an electronic signal, optical signal, radio signal or computer readable storage medium.

BRIEF DESCRIPTION OF DRAWINGS

Embodiments of the invention will be described with reference to the accompanying drawings, wherein:

FIG. 1 is a schematic view of one embodiment of a system for ER measurement according to the present invention,

FIG. 2 is a schematic drawing showing the light source, the cutting tool, the detector and is indicating the detection angle $\alpha$ and the tilting angle $\beta$ of the cutting tool,

FIG. 3 is an example of an optical view in the detector during a measurement in accordance with the present invention,

FIG. 4 is an example of a stored intensity data, with the ER at the x-label and intensity I(det) at the y-label, and wherein the function is presented in the figure,

FIG. 5 shows a block schematic of steps of a method according to an embodiment,

FIG. 6 shows a block schematic of steps of a method according to an embodiment.

DETAILED DESCRIPTION OF THE INVENTION

In the following, embodiments of the invention will be described by referring to an exemplifying embodiment of a method of and a system for determining the edge radius, ER, of a cutting edge of a cutting tool.

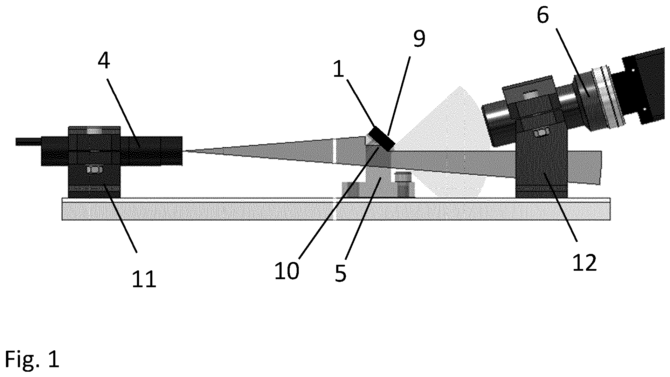

Fig.1 is a schematic view of an embodiment of a system for determining ER of a cutting tool. In the following, the system shown in Fig.1 will also be referred to for explaining an embodiment of the method of determining an ER of a cutting tool in accordance with the present invention.

The system shown in Fig. 1 comprises a light source 4 mounted in a fixture 11 for holding the light source. The system further comprises a fixture 5 for holding a cutting tool 1. On the opposite side of the fixture 5 for holding a cutting tool 1, in relation to the light source 4, there is a detector unit 6 positioned. The detector unit 6 is mounted in a fixture 12 for holding the detector unit. The detector unit is connected to a storage unit 7 (not shown) for storing intensity data.

The cutting tool 1 is positioned in the fixture 5 such that the cutting edge 8 of the cutting tool 1 can be subjected to light from the light source 4. When the light source is on, light is emitted from the light source and is directed to the cutting edge whereby the cutting tool is provided by a light exposed region 10 of the cutting tool which is the region that is faced towards the light source, and a shadow region 9 of the cutting tool that is faced away from the light source.

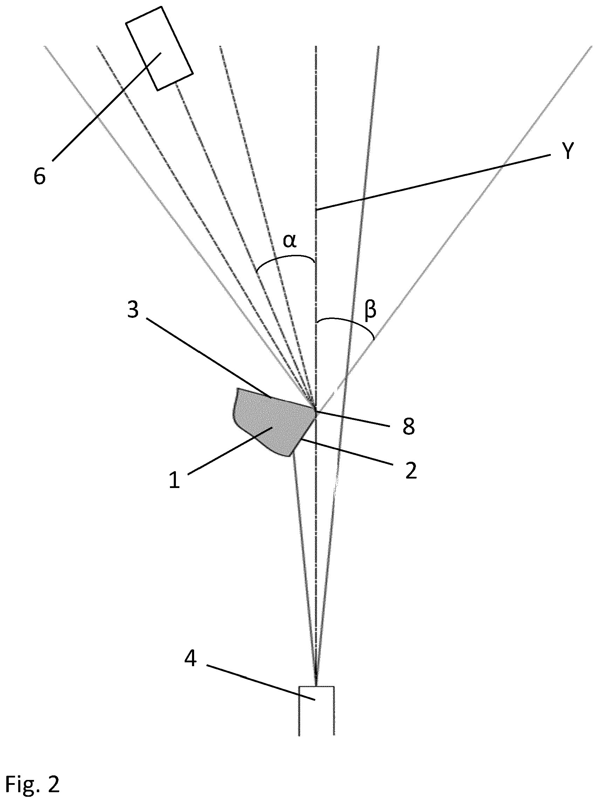

Figure 2 is a close-up of the light source 4, the cutting edge 8 of the cutting tool 1 and the detector unit 6. The primary direction Y of light is indicated. The rake face 2 and the flank face 3 of the cutting tool is indicated in the figure. As seen in a cross section of the cutting edge, the angle $\beta$ is the angle between the primary direction Y of light and the rake face. If the method is run with a very small $\beta$ the ER very close to the rake face will be analysed, and if $\beta$ is large the ER very close flank face will be analysed.

The detector unit 6 is positioned at the shadow side of the cutting tool. The detector unit is positioned and directed towards the cutting edge of the cutting tool. As seen in a cross section of the cutting edge, $\alpha$ is the angle between the direction from the edge to a center of the detection area and the primary direction, Y, of light. With a very small $\alpha$ the detector is placed close to the primary direction Y of light.

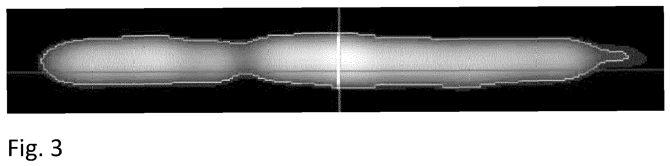

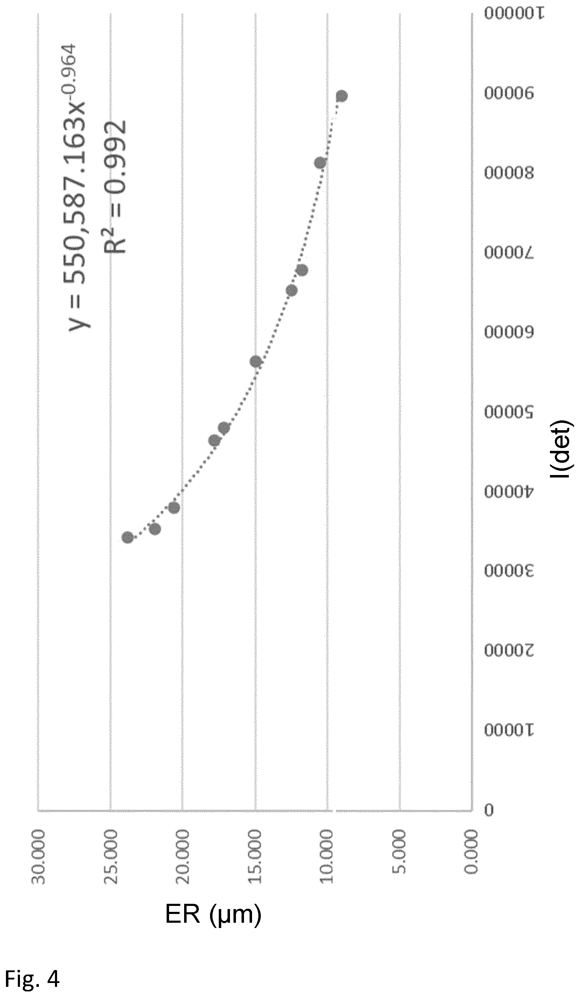

Figure 3 shows an example of a detection area and figure 4 shows an example of a function of stored intensity data with ER as a function of intensity.

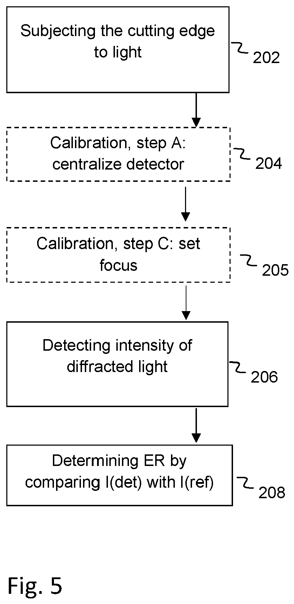

In Figures 5 steps of a method of determining ER according to an embodiment is shown in a block schematic view. The method comprises the step 202 of subjecting the cutting edge to light, the step 206 of detecting the intensity of the diffracted light in the shadow of the cutting tool and the step 208 of determining ER by comparing the detected intensity I(det) with stored intensity data I(ref).

In one embodiment the method can further comprise a step 204 (step A) of centralizing the detector by moving the detector unit 6 into a position where the diffracted light is centralized in the detection area of the detector unit.

In one embodiment the method can further comprise a step 205 (step C) of setting the focus wherein the focus of the light is adjusted to be at the cutting edge.

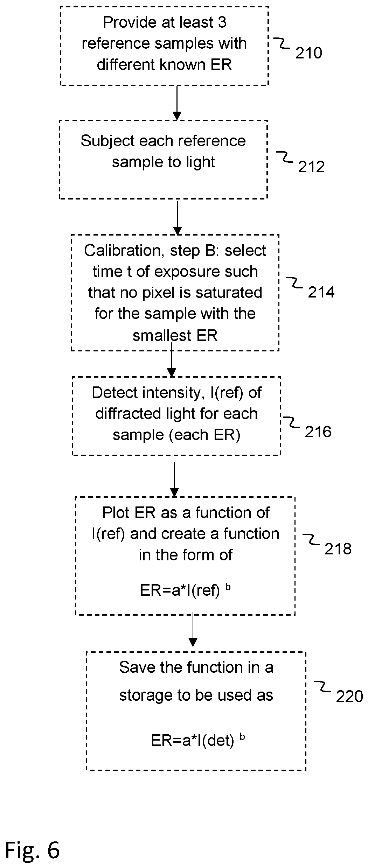

In Figures 6 steps of a method collection of reference intensities according to an embodiment is shown in a block schematic view. This embodiment comprises the initial step 210 of providing at least 3 reference samples with different known ER. The selection of samples is suitable made to be representative of the ER range of interest of the cutting tools to be analysed. One of the reference samples has the smallest ER among the reference samples. The embodiment further comprises a step 212 of subjecting each of the reference samples to light.

In one embodiment the method comprises a step 214 (step B) of selecting the time t of exposure such that no pixel in the detection area is saturated. This step is made by analysing the ER of the sharpest cutting edge since the diffracted intensity from this sample will be the sharpest.

In one embodiment shown in Figure 6 the method comprises the step 216 of detecting intensity of diffracted light from each of the reference samples, i.e. each of the reference ER. This is to collect the reference intensity that is representative for a specific ER.

In one embodiment shown in Figure 6 the method comprises the step 218 of plotting ER as a function of detected intensity of the reference samples, I(ref), and then make a curve fit in the form $ER = a*I(ref)^b$.

In one embodiment shown in Figure 6 the method comprises the step 220 of saving the function from the curve fit as stored intensity data to be used in the method of determining an ER of a cutting tool with unknown ER through the formula corresponding formula with $ER = a*I(det)^b$.

EXAMPLES

Exemplifying embodiments of the present invention will now be disclosed in more detail. The ER of cutting tools were measured with a system and a method in accordance with the invention.

The system

In one example of the invention a system was constructed, calibration of the system was made, reference intensities were collected and thereafter ER of cutting tools were determined using the system and the reference intensity data.

The system included a laser and a camera with the features listed in Table 1.

Table 1.

| COMPONENT DETAILS | Name or value |
| --- | --- |
| CAMERA: | Allied Vision Alvium 1800 U-507m |
| OPTIC IN CAMERA: | Opto Engineering RT-HR-6M-71 |
| WORKING DISTANCE OF CAMERA: | 71,1 mm |
| FIELD OF VIEW OF CAMERA: | 1,42 x 1,18 mm |
| DEPTH OF FIELD OF CAMERA | 0,1 mm |
| LASER: | Flexpoint MVnano-640-1-1-F-STD |
| LASER LINE THICKNESS | 0,14 mm |
| LASER FAN ANGLE: | 1 DEGREE |
| LASER OFFSET: | 100 mm |
| LASER WAVELENGTH: | 640 nm |
| ANGLE BETWEEN LASER AND CAMERA. | 15 degrees |

The system was further equipped with a fixture to hold the cutting tool insert and a holding system with movable axes to allow the cutting edge of the cutting tool to be rotated about the edge line and translated in a direction along the cutting edge to reposition the edge vertically in the field of view.

The laser and the camera were adjusted so that they were positioned correctly relative to each other and are focussed on the edge. The position of the camera was adjusted so that the edge appears coincident with a horizontal reference line indicating the centre of the field of view in the camera. Using a micrometre stage in the fixture holding of the camera, the camera's position can be adjusted until the area near the edge appears in focus. The focus should be consistent across the full width of the field of view. If it is not in focus the camera should be rotated to achieve this and refocussed. The focus is easiest to achieve if the insert is orientated at an angle to the camera. A band of pixels will appear in focus and by adjusting the cameras position, the band can be observed to move towards or away from the edge. Focus is when the centre of this band coincides with the edge.

The laser is placed at an arbitrary position. To focus the laser, the prism that forms the line is removed and a piece of paper placed at a level with the edge. The spot formed by the laser on the paper can be seen using the camera or by looking directly at the spot through protective glasses. The laser has an adjuster dial, and this is adjusted whilst observing the spot. Focus is achieved when the spot size is the minimum. The prism is now replaced into position to achieve a line laser. The laser position is adjusted so that the laser line is coincident with a vertical line indicating the centre of the field of view. Alternatively, the laser can be rotated until the diffraction image does not move laterally as the vertical slide is adjusted up and down.

The offsets from the cutting edge are approximately 100 mm and 71 mm for the laser and camera respectively in this example of system.

The system was controlled by a computer program which receives the intensity data from the camera, applies a filter and then defines an area based a continuous area of pixels in the field of view greater than a threshold value that contains the diffraction image.

The program returns the sum of all the pixel values in the area which is the measured intensity, I(det). The program can then return the ER by using the I(det) and an earlier saved calibration curve.

In some embodiments, the system further comprises processing circuitry and a memory. The processing circuitry may comprise one or more programmable processor, application-specific integrated circuits, field programmable gate arrays or combinations of these (not shown) adapted to execute instructions. The memory contains instructions executable by said processing circuitry, whereby the system is operable to perform any steps of a method according to the present invention.

The instructions executable by said processing circuitry may be arranged as a computer program stored e.g. in the memory. The processing circuitry and the memory may be arranged in a sub-arrangement. The sub-arrangement may be a micro-processor and adequate software and storage therefore, a Programmable Logic Device, PLD, or other electronic component(s)/processing circuit(s) configured to perform the methods mentioned above.

The computer program may comprise computer readable code means, which when run in the system causes the system to perform the steps described in any of the described embodiments of a method according to the present invention. The computer program may be carried by a computer program product connectable to the processing circuitry. The computer program product may be the memory. The memory may be realized as for example a RAM (Random-access memory), ROM (Read-Only Memory) or an EEPROM (Electrical Erasable Programmable ROM). Further, the computer program may be carried by a separate computer-readable medium, such as a CD, DVD or flash memory, from which the program could be downloaded into the memory. Alternatively, the computer program may be stored on a server or any other entity connected to the system. The computer program may then be downloaded from the server into the memory.

Calibration and collection of reference intensities

For the program to be able to return metric values for the radius of curvature, a calibration curve needs to be established. The calibration curve was concluded to be of the form $ER=a*I(det)^b$ where a and b are constants and I(det) is the sum of the detected intensities. The calibration is specific to the specification of the instrument. A new calibration will need to be performed should the camera, laser or lens be replaced.

A minimum of three reference pieces are required in the range of interest and the ER of these need to be measured by another process such that the ER values are known. The ER values can for example be confirmed by interference profile measurements or by profilometer measurements. Suitable ranges of interest for inserts are for example 4-25 $\mu$m and 25 - 60 $\mu$m. It is possible to calibrate a wider range but with a reduction in accuracy. The accuracy of the reference pieces directly influences the accuracy of the values returned by the instrument after calibration

Clean the reference piece with the smallest radius and place it in the instrument, check that the focus and the position of the sample is correct. Note the maximum pixel value. A pixel value of 255 indicates saturated pixels in the image and data from such images cannot be used for measurements. It is suitable to reduce the exposure time so that the maximum value is at most 175-200. This allows radii a little smaller than the calibrated range to be measured.

Obtain a value for detected intensities for each of the reference pieces. Plot a graph of detected intensity vs ER and fit a curve with the general form $y=ax^b$. The formula describing the curve can now be used in the program to obtain metric values for ER.

Below is an example of a program code for the intensity data collection and identification of the function to use, wherein the detected intensity I(det) is called "sum" and wherein the intensity in each pixel is called "grey value".

Written in HDevelop from MVTec:

HALCON 20.11 Steady
HDevelop version: 20.11.3.0 (01.07.2022)
HALCON version: 20.11.3.0 (01.07.2022)

```
*Grab an image
read_image (Image, 'C:/SomePlace/image.tif')
*Amount of smoothing
```

$$alpha:= 0.3$$

```
*Threshold limit to filter out noice
```

$$thresholdLow:=4$$

```
*Smooth the image
smooth_image (Image, ImageSmooth, 'deriche2', alpha)
*Threshold to remove noice
threshold (ImageSmooth, Region, thresholdLow, 255)
*Get the region points of the diffracted light
get_region_points (Region, Rows, Columns)
*Get the gray values of the diffracted ligtht
get_grayval (ImageSmooth, Rows, Columns, Grayval)
*Sum up all gray values
tuple_sum (Grayval, Sum)
*Calculate ER (A*Sum^B)
```

$$A:=6797.65820733542$$

$$B:=-0.480121008332633$$

$$ER := A*pow(Sum,B)$$

The ER determination method

The system as disclosed above was used in an exemplifying determination of an ER of a cutting edge. The system is adjusted and aligned for the measurement to be made prior to the method below starts. The reference intensities for the specific setup of the system is collected as disclosed above. The system is build-in in a light protective cover to frame any outer light from the light intensity detection. The following describes the procedure to take a measurement in one embodiment of the invention:

1. The cutting tool insert edge is cleaned in acetone and blown by air.

- A perfectly clean edge is not necessary as the operator is able to judge by looking at the diffraction image if it is suitable for a measurement to be taken and to take any necessary actions.

2. The protective covers are opened, the insert is placed in its fixture, the protective covers are closed.
3. Simultaneously with closing the cover, the power to the laser returns and an image showing the diffraction appears in a Human Machine Interface HMI.
4. Determining that the image has the typical form and seems correct.

- A non-typical form indicates dirt or damage to the edge and such images are unsuitable for measurements.
- If this happens then the solution is to reposition the fixture axis to measure on a nearby position where the diffraction image is suitable for measurements.

5. Determining that the diffraction image is positioned correctly relative to the centre of the field of view.
6. The instrument captures images continuously. New ER values are displayed with a period equal to the exposure time. To the operator this is experienced as real time. The radius is calculated by applying the function obtained from the calibration process to the value of the detected intensity obtained from the image.

7. Specific measurements can be captured and for example saved to a text file.

Examples of stored reference intensities and a formula representing the curve is shown in Figure 4. The angle $\alpha$ was in this measurement 45 degrees. The function in this example was: ER=550587.163 * I(det)$^{-0.964}$

This curve and the corresponding system were successfully used to determine the ER of cutting tools in accordance with the present invention.

While the invention has been described in connection with various exemplary embodiments, it is to be understood that the invention is not to be limited to the disclosed exemplary embodiments; on the contrary, it is intended to be defined by the appended claims.

**Claims**

1. A method of determining the edge radius, ER, of a cutting edge (8) of a cutting tool (1) using light diffraction, wherein the cutting edge (8) is located between a rake face (2) of the cutting tool and a flank face (3) of the cutting tool (1), and wherein the cutting edge (8) is provided with an edge rounding, the method comprises the steps of

    - non-parallel to the cutting edge, subjecting the cutting edge of the cutting tool to light during a selected exposure time, t, such that light is diffracted by the edge rounding and wherein a light exposed region of the cutting tool is in line of sight from the light source and a shadow region of the cutting tool comprise diffracted light,
    - detecting intensity of the diffracted light from the shadow region of the cutting tool, wherein the detecting comprises detecting in a detection area, wherein the detection area extends both along the cutting edge and across the cutting edge to include the light diffracted by the cutting edge, detecting the intensity in one or more detection points that covers the detection area, and summarizing the intensities detected in all the detection points and achieving the detected intensity, I(det),
    - determining the ER of the cutting edge by comparing the detected intensity, I(det), with stored intensity data, I(ref), wherein the stored intensity data I(ref) is representative of ER.

2. The method in accordance with claim 1, wherein the step of detecting intensity comprises positioning a detector unit (6) at an angle $\alpha$ of 10° - 30°, wherein, as seen in a cross section of the cutting edge, $\alpha$ is the angle between the direction from the edge to a center of the detection area and the primary direction, Y, of light, and detecting intensity with the detector unit (6) in this position.

3. The method in accordance with any of the preceding claims, wherein the method further comprises a step of comparing the determined ER with a valid range of ER between 2 $\mu$m and 70 $\mu$m, preferably between 4 $\mu$m and 50 $\mu$m.

4. The method in accordance with any of the preceding claims, wherein the step of subjecting the cutting edge of the cutting tool to light comprises subjecting the cutting edge to laser light.

5. The method in accordance with any of the preceding claims, wherein the method comprises a calibration comprising step A prior to the step of detecting intensity, the step A comprising moving the detector unit (6) into a position where the diffracted light is centralized in the detection area of the detector unit (6).

6. The method in accordance with any of the preceding claims wherein the method comprises a calibration comprising step B to select an exposure time, t, the step B is made as part of a collection of stored intensity data I(ref) and is made prior to the step of detecting intensity, the step B comprises using a detector unit (6) with pixels and wherein each pixel has an upper limit where it is saturated, and wherein the step B includes exposing the sharpest of the reference cutting edges to light and selecting a time t of exposure such that none of the pixels in the detector unit (6) is saturated by the diffracted light during the exposure time t.

7. The method in accordance with any of the preceding claims wherein the step of determining ER comprise comparing detected intensity with stored intensity and wherein the stored intensity, I(ref), representative of ER, is a function:

$$ER=a*I(det)^{b}$$

wherein I(det) is the sum of the intensities detected by the detector unit (6) for a specific ER and a and b are constants.

8. The method in accordance with any of the preceding claims wherein the step of detecting intensity is made at two separate positions along the edge rounding, at an angle $\beta$ of between 20°- 25°, preferably at about 22.5°, and at an angle $\beta$ of between 40°- 50°, preferably at of about 45°, wherein $\beta$, as seen in a cross section of the cutting edge, is the angle between the primary direction Y of the light and the rake face of the cutting tool.

9. A system for determining the edge radius (ER) of a cutting edge of a cutting tool (1), wherein the system comprises:

   - a light source (4),
   - a fixture (5) for holding the cutting tool,
   - a cutting tool with a cutting edge
   - a detector unit (6) for detecting light intensity,
   wherein the cutting edge (8) is located between a rake face (2) of the cutting tool and a flank face (3) of the cutting tool (1), and wherein the cutting edge (8) is provided with an edge rounding, the cutting tool is positioned in the fixture (5), wherein the light source is positioned to subject the cutting edge to light such that light is diffracted by the edge rounding, wherein a light exposed region of the cutting tool is in line of sight from the light source and a shadow region of the cutting tool comprise diffracted light,
   the detector unit is positioned in shadow of the cutting tool and is arranged to detect diffracted light from the edge in the shadow region of the cutting tool, the detector unit is arranged to detect intensity in a detection area, wherein the detection area extends both along the cutting edge and across the cutting edge to include the light diffracted by the cutting edge, the intensity in the detection area is detected in one or more detection points that covers the detection area, such that an output from the detector unit is a detected intensity I(det) which corresponds to the sum of the intensities in the detection points,
   the system further comprises a storage unit with stored intensity data I(ref) representative of ER, whereby ER can be determined by comparing the detected intensity, I(det), with the stored intensity data, I(ref).

10. The system of claim 9, wherein the detector unit (6) is positioned at an angle $\alpha$ of 10° - 30° from the primary direction Y of light in shadow of the cutting tool (1), wherein, as seen in a cross section of the cutting edge, $\alpha$ is the angle between the direction from the edge to a center of the detection area and the primary direction, Y, of light.

11. The system of any of claims 9-10, wherein the detector unit (6) is a camera.

12. The system of any of claims 9-11, wherein the light source (4) is a light source that provide emitted light that is extended in one direction such that the emitted light is line shaped, wherein the light is oriented such that the line intercept the cutting edge, preferably the line oriented with its extension in a direction perpendicular to the extension of the cutting edge.

13. The system of any of claims 9-12, wherein the light source (4) is a laser, preferably the wavelength of the laser is 600-700 nm.

14. The system according to any one of claims 9-13, further comprising: processing circuitry; and a memory, said memory containing instructions executable by said processing circuitry whereby said system is operative for performing the method according to any of claims 1-8.

15. A computer program comprising computer readable code means to be run in the system according to claim 14, which computer readable code means when run in the system causes the system to perform the method according to any of claims 1-8.

16. A carrier containing the computer program according to claim 15, wherein the carrier is one of an electronic signal, optical signal, radio signal or computer readable storage medium.

**Patentansprüche**

1. Verfahren zum Bestimmen des Kantenradius ER einer Schneidkante (8) eines Schneidwerkzeugs (1) unter Anwendung von Lichtbeugung, wobei sich die Schneidkante (8) zwischen einer Spanfläche (2) des Schneidwerkzeugs und einer Freifläche (3) des Schneidwerkzeugs (1) befindet und wobei die Schneidkante (8) mit einer Kantenrundung versehen ist, wobei das Verfahren die folgenden Schritte umfasst

- Bestrahlen der Schneidkante des Schneidwerkzeugs während einer ausgewählten Belichtungszeit t mit Licht, aber nicht parallel zur Schneidkante, so dass Licht durch die Kantenrundung gebeugt wird, wobei ein belichteter Bereich des Schneidwerkzeugs in Sichtlinie zur Lichtquelle liegt und ein Schattenbereich des Schneidwerkzeugs gebeugtes Licht umfasst,

- Erfassen der Intensität des gebeugten Lichts aus dem Schattenbereich des Schneidwerkzeugs, wobei das Erfassen das Erfassen in einem Erfassungsbereich umfasst, wobei sich der Erfassungsbereich sowohl entlang der Schneidkante als auch quer zur Schneidkante erstreckt, um das von der Schneidkante gebeugte Licht einzuschließen, und das Erfassen der Intensität an einem oder mehreren Erfassungspunkten, die der Erfassungsbereich abdeckt, und Zusammenfassen der an allen Erfassungspunkten erfassten Intensitäten und Ermitteln der erfassten Intensität I(det),

- Bestimmen des ER der Schneidkante durch Vergleichen der erfassten Intensität, I(det), mit gespeicherten Intensitätsdaten, I(ref), wobei die gespeicherten Intensitätsdaten I(ref) repräsentativ für ER sind.

2. Verfahren nach Anspruch 1, wobei der Schritt des Erfassens der Intensität das Positionieren einer Detektoreinheit (6) in einem Winkel $\alpha$ von 10° bis 30° umfasst, wobei, in einem Querschnitt der Schneidkante betrachtet, $\alpha$ der Winkel zwischen der Richtung von der Kante zu einem Zentrum des Erfassungsbereichs und der Hauptrichtung Y des Lichts ist, und das Erfassen der Intensität mit der Detektoreinheit (6) in dieser Position.

3. Verfahren nach einem der vorstehenden Ansprüche, wobei das Verfahren ferner einen Schritt des Vergleichens des ermittelten ER mit einem gültigen Bereich von ER zwischen 2 $\mu$m und 70 $\mu$m, vorzugsweise zwischen 4 $\mu$m und 50 $\mu$m, umfasst.

4. Verfahren nach einem der vorstehenden Ansprüche, wobei der Schritt des Bestrahlens der Schneidkante des Schneidwerkzeugs mit Licht umfasst, dass die Schneidkante mit Laserlicht bestrahlt wird.

5. Verfahren nach einem der vorstehenden Ansprüche, wobei das Verfahren einen Kalibrierungsschritt A vor dem Schritt des Erfassens der Intensität umfasst, wobei der Schritt A das Bewegen der Detektoreinheit (6) in eine Position umfasst, in der das gebeugte Licht im Erfassungsbereich der Detektoreinheit (6) zentriert ist.

6. Verfahren gemäß einem der vorstehenden Ansprüche, wobei das Verfahren eine Kalibrierung umfasst, die Schritt B zum Auswählen einer Belichtungszeit t umfasst, wobei Schritt B als Teil einer Sammlung gespeicherter Intensitätsdaten I(ref) durchgeführt wird und vor dem Schritt des Erfassens der Intensität durchgeführt wird, wobei der Schritt B die Verwendung einer Detektoreinheit (6) mit Pixeln umfasst, wobei jedes Pixel eine Obergrenze aufweist, bei der es gesättigt ist, und wobei der Schritt B das Belichten der schärfsten der Referenzschnittkanten mit Licht und das Auswählen einer Belichtungszeit t umfasst, so dass keines der Pixel in der Detektoreinheit (6) während der Belichtungszeit t durch das gebeugte Licht gesättigt wird.

7. Verfahren gemäß einem der vorstehenden Ansprüche, wobei der Schritt des Bestimmens von ER das Vergleichen der erfassten Intensität mit der gespeicherten Intensität umfasst und wobei die gespeicherte Intensität I(ref), die für ER repräsentativ ist, eine Funktion ist:

$$ER = a*I(det)^b,$$

wobei I(det) die Summe der von der Detektoreinheit (6) für einen bestimmten ER erfassten Intensitäten ist und a und b Konstanten sind.

8. Verfahren nach einem der vorstehenden Ansprüche, wobei der Schritt des Erfassens der Intensität an zwei getrennten Positionen entlang der Kantenrundung durchgeführt wird, in einem Winkel $\beta$ zwischen 20° und 25°, vorzugsweise bei etwa 22,5°, und bei einem Winkel $\beta$ zwischen 40° und 50°, vorzugsweise bei etwa 45°, wobei $\beta$, in einem Querschnitt der Schneidkante betrachtet, der Winkel zwischen der Hauptrichtung Y des Lichts und der Spanfläche des Schneidwerkzeugs ist.

9. System zur Bestimmung des Kantenradius (ER) einer Schneidkante eines Schneidwerkzeugs (1), wobei das System Folgendes aufweist:

- eine Lichtquelle (4),
- eine Halterung (5) zum Halten des Schneidwerkzeugs,
- ein Schneidwerkzeug mit einer Schneidkante
- eine Detektoreinheit (6) zum Erfassen der Lichtintensität,

wobei sich die Schneidkante (8) zwischen einer Spanfläche (2) des Schneidwerkzeugs und einer Freifläche (3) des Schneidwerkzeugs (1) befindet und wobei die Schneidkante (8) mit einer Kantenrundung versehen ist, wobei das Schneidwerkzeug in der Halterung (5) positioniert ist,

wobei die Lichtquelle so positioniert ist, dass sie die Schneidkante so mit Licht bestrahlt, dass das Licht durch die Kantenrundung gebeugt wird, wobei ein lichtbestrahlter Bereich des Schneidwerkzeugs in Sichtlinie zur Lichtquelle liegt und ein Schattenbereich des Schneidwerkzeugs gebeugtes Licht umfasst,

wobei die Detektoreinheit im Schatten des Schneidwerkzeugs positioniert und so angeordnet ist, dass sie das von der Kante im Schattenbereich des Schneidwerkzeugs gebeugte Licht erfasst, wobei die Detektoreinheit so angeordnet ist, dass sie die Intensität in einem Erfassungsbereich erfasst, wobei sich der Erfassungsbereich sowohl entlang der Schneidkante als auch quer zur Schneidkante erstreckt, um das von der Schneidkante gebeugte Licht einzubeziehen, wobei die Intensität im Erfassungsbereich an einem oder mehreren Erfassungspunkten erfasst wird, die der Erfassungsbereich abdeckt, sodass eine Ausgabe der Detektoreinheit eine erfasste Intensität I(det) ist, die der Summe der Intensitäten an den Erfassungspunkten entspricht,

wobei das System ferner eine Speichereinheit mit gespeicherten Intensitätsdaten I(ref) umfasst, die für ER repräsentativ sind, wodurch ER durch Vergleichen der erfassten Intensität I(det) mit den gespeicherten Intensitätsdaten I(ref) bestimmt werden kann.

10. System nach Anspruch 9, wobei die Detektoreinheit (6) in einem Winkel $\alpha$ von 10° bis 30° zur Hauptrichtung Y des Lichts im Schatten des Schneidwerkzeugs (1) positioniert ist, wobei, in einem Querschnitt der Schneidkante betrachtet, $\alpha$ der Winkel zwischen der Richtung von der Kante zu einem Mittelpunkt des Erfassungsbereichs und der Hauptrichtung Y des Lichts ist.

11. System nach einem der Ansprüche 9-10, wobei die Detektoreinheit (6) eine Kamera ist.

12. System nach einem der Ansprüche 9 bis 11, wobei die Lichtquelle (4) eine Lichtquelle ist, die emittiertes Licht liefert, das sich in einer Richtung erstreckt, so dass das emittierte Licht linienförmig ist, wobei das Licht so ausgerichtet ist, dass die Linie die Schneidkante schneidet, wobei die Linie vorzugsweise mit ihrer Erstreckung in einer Richtung senkrecht zur Erstreckung der Schneidkante ausgerichtet ist.

13. System nach einem der Ansprüche 9 bis 12, wobei die Lichtquelle (4) ein Laser ist, wobei vorzugsweise die Wellenlänge des Lasers 600 bis 700 nm beträgt.

14. System gemäß einem der Ansprüche 9 bis 13, das ferner Folgendes aufweist:

eine Verarbeitungsschaltung und
einen Speicher, wobei der Speicher Anweisungen enthält, die von der Verarbeitungsschaltung ausgeführt werden können, wodurch das System zur Durchführung des Verfahrens gemäß einem der Ansprüche 1 bis 8 betriebsfähig ist.

15. Computerprogramm, das computerlesbare Codemittel umfasst, die in dem System gemäß Anspruch 14 ausgeführt werden sollen, wobei die computerlesbaren Codemittel, wenn sie in dem System ausgeführt werden, das System veranlassen, das Verfahren gemäß einem der Ansprüche 1 bis 8 auszuführen.

16. Träger, der das Computerprogramm gemäß Anspruch 15 enthält, wobei der Träger ein elektronisches Signal, ein optisches Signal, ein Funksignal oder ein computerlesbares Speichermedium ist.

## Revendications

1. Procédé de détermination du rayon d'arête, ER, d'une arête de coupe (8) d'un outil de coupe (1) utilisant la diffraction de lumière, où l'arête de coupe (8) est située entre une face d'attaque (2) de l'outil de coupe et une face de flanc (3) de l'outil de coupe (1), et où l'arête de coupe (8) est dotée d'un arrondi d'arête, le procédé comprenant les étapes consistant à

- de manière non parallèle à l'arête de coupe, soumettre l'arête de coupe de l'outil de coupe à de la lumière durant un temps d'exposition sélectionné, t, de telle sorte que la lumière est diffractée par l'arrondi d'arête et où une région exposée à la lumière de l'outil de coupe est en ligne de mire de la source de lumière et une région d'ombre de l'outil de coupe comprend de la lumière diffractée,

- détecter une intensité de la lumière diffractée de la région d'ombre de l'outil de coupe, où la détection comprend le fait de détecter dans une zone de détection, où la zone de détection s'étend à la fois le long de l'arête de coupe et transversalement à l'arête de coupe pour inclure la lumière diffractée par l'arête de coupe, en détectant l'intensité à un ou plusieurs points de détection qui couvrent la zone de détection, et en compilant les intensités détectées à tous les points de détection et obtenant l'intensité détectée, I(dét),

- déterminer l'ER de l'arête de coupe en comparant l'intensité détectée, I(dét), à une donnée d'intensité mémorisée, I(réf), où la donnée d'intensité mémorisée, I(réf) est représentative de l'ER.

2. Procédé selon la revendication 1, dans lequel l'étape consistant à détecter une intensité comprend le fait de positionner une unité de détecteur (6) à un angle $\alpha$ de 10° à 30°, où, selon une vue d'observation dans une coupe transversale de l'arête de coupe, $\alpha$ est l'angle entre la direction allant de l'arête vers un centre de la zone de détection et la direction principale, Y, de la lumière, et le fait de détecter une intensité avec l'unité de détecteur (6) dans cette position.

3. Procédé selon l'une quelconque des revendications précédentes, où le procédé comprend en outre une étape consistant à comparer l'ER déterminé à une plage valide d'ER entre 2 $\mu$m et 70 $\mu$m, de préférence entre 4 $\mu$m et 50 $\mu$m.

4. Procédé selon l'une quelconque des revendications précédentes, dans lequel l'étape consistant à soumettre l'arête de coupe de l'outil de coupe à de la lumière comprend le fait de soumettre l'arête de coupe à de la lumière laser.

5. Procédé selon l'une quelconque des revendications précédentes, où le procédé comprend un étalonnage comprenant une étape A avant l'étape consistant à détecter une intensité, l'étape A comprenant le fait de déplacer l'unité de détecteur (6) dans une position où la lumière diffractée est centralisée dans la zone de détection de l'unité de détecteur (6).

6. Procédé selon l'une quelconque des revendications précédentes, où le procédé comprend un étalonnage comprenant une étape B pour sélectionner un temps d'exposition, t, l'étape B est réalisée en tant que partie d'une collecte de donnée d'intensité mémorisée I(réf) et est réalisée avant l'étape consistant à détecter une intensité, l'étape B comprend le fait d'utiliser l'unité de détecteur (6) avec des pixels et où chaque pixel présente une limite supérieure à laquelle il est saturé, et où l'étape B inclut le fait d'exposer la plus acérée des arêtes de coupe de référence à de la lumière et le fait de sélectionner un temps t d'exposition de telle sorte qu'aucun des pixels dans l'unité de détecteur (6) ne soit saturé par la lumière diffractée durant le temps d'exposition t.

7. Procédé selon l'une quelconque des revendications précédentes, dans lequel l'étape consistant à déterminer l'ER comprend le fait de comparer l'intensité détectée à l'intensité mémorisée et où l'intensité mémorisée, I(réf), représentative de l'ER, est une fonction :

$$ER = a*I(dét)^b$$

où I(dét) est la somme des intensités détectées par l'unité de détecteur (6) pour un ER spécifique et a et b sont des constantes.

8. Procédé selon l'une quelconque des revendications précédentes, dans lequel l'étape consistant à détecter une intensité est réalisée en deux positions distinctes le long de l'arrondi d'arête, à un angle $\beta$ compris entre 20° et 25°, de préférence à environ 22,5°, et à un angle $\beta$ compris entre 40° et 50°, de préférence à environ 45°, où $\beta$, selon une vue d'observation dans une coupe transversale de l'arête de coupe, est l'angle entre la direction principale Y de la lumière et la face d'attaque de l'outil de coupe.

9. Système destiné à déterminer le rayon d'arête (ER) d'une arête de coupe d'un outil de coupe (1), où le système comprend :

- une source de lumière (4),

- une fixation (5) destinée à maintenir l'outil de coupe,
- un outil de coupe ayant une arête de coupe
- une unité de détecteur (6) destinée à détecter une intensité lumineuse,

où l'arête de coupe (8) est située entre une face d'attaque (2) de l'outil de coupe et une face de flanc (3) de l'outil de coupe (1), et où l'arête de coupe (8) est dotée d'un arrondi d'arête, l'outil de coupe est positionné dans la fixation (5),

où la source de lumière est positionnée pour soumettre l'arête de coupe à de la lumière de telle sorte que la lumière est diffractée par l'arrondi d'arête, où une région exposée à la lumière de l'outil de coupe est en ligne de mire de la source de lumière et une région d'ombre de l'outil de coupe comprend de la lumière diffractée,

l'unité de détecteur est positionnée dans l'ombre de l'outil de coupe et est agencée pour détecter la lumière diffractée par l'arête dans la région d'ombre de l'outil de coupe, l'unité de détecteur est agencée pour détecter une intensité dans une zone de détection, où la zone de détection s'étend à la fois le long de l'arête de coupe et transversalement à l'arête de coupe pour inclure la lumière diffractée par l'arête de coupe, l'intensité dans la zone de détection est détectée à un ou plusieurs points de détection qui couvrent la zone de détection, de telle sorte qu'une sortie de l'unité de détecteur est une intensité détectée, I(dét) laquelle correspond à la somme des intensités détectées aux points de détection,

le système comprend en outre une unité de mémorisation ayant une donnée d'intensité mémorisée I(réf) représentative de l'ER, grâce à quoi l'ER peut être déterminé en comparant l'intensité détectée, I(dét), à la donnée d'intensité mémorisée, I(réf).

10. Système selon la revendication 9, dans lequel l'unité de détecteur (6) est positionnée à un angle $\alpha$ de 10° à 30° par rapport à la direction principale Y de la lumière dans l'ombre de l'outil de coupe (1), où, selon une vue d'observation dans une coupe transversale de l'arête de coupe, $\alpha$ est l'angle entre la direction allant de l'arête vers un centre de la zone de détection et la direction principale, Y, de la lumière.

11. Système selon l'une quelconque des revendications 9 et 10, dans lequel l'unité de détecteur (6) est un appareil de prise de vues.

12. Système selon l'une quelconque des revendications 9 à 11, dans lequel la source de lumière (4) est une source de lumière qui fournit une lumière émise qui se propage dans une seule direction de telle sorte que la lumière émise est rectiligne, où la lumière est orientée de telle sorte que la ligne croise l'arête de coupe, de préférence la ligne étant orientée de sorte à courir dans une direction perpendiculaire à l'étendue de l'arête de coupe.

13. Système selon l'une quelconque des revendications 9 à 12, dans lequel la source de lumière (4) est un laser, de préférence la longueur d'onde du laser va de 600 à 700 nm.

14. Système selon l'une quelconque des revendications 9 à 13, comprenant en outre :

un ensemble de circuits de traitement ; et
une mémoire, ladite mémoire contenant des instructions exécutables par ledit ensemble de circuits de traitement grâce à quoi ledit système est en mesure de mettre en œuvre le procédé selon l'une quelconque des revendications 1 à 8.

15. Programme informatique comprenant un moyen de code lisible par ordinateur à exécuter dans le système selon la revendication 14, lequel moyen de code lisible par ordinateur lorsqu'il est exécuté dans le système amène le système à mettre en œuvre le procédé selon l'une quelconque des revendications 1 à 8.

16. Support contenant le programme informatique selon la revendication 15, où le support est l'un d'un signal électronique, d'un signal optique, d'un signal radioélectrique ou d'un support de mémorisation lisible par ordinateur.

Fig. 1

Fig. 2

Fig. 3

Fig. 4

Subjecting the cutting edge
to light ⟩ 202

Calibration, step A:
centralize detector ⟩ 204

Calibration, step C: set
focus ⟩ 205

Detecting intensity of
diffracted light ⟩ 206

Determining ER by
comparing I(det) with I(ref) ⟩ 208

Fig. 5

Fig. 6